# EUROPEAN PATENT SPECIFICATION

(11) **EP 1 389 051 B1**
(45) Date of publication and mention of the grant of the patent: **09.01.2008**
(21) Application number: 02730149.8
(22) Date of filing: 12.04.2002
(51) Int. Cl.: A23L 1/24, A23D 7/015

(54) **EDIBLE OIL-IN-WATER EMULSION HAVING A REDUCED CONTENT OF OIL**
ESSBARE ÖL-IN-WASSER EMULSION MIT EINEM VERRINGERTEN ÖLGEHALT
EMULSION DE TYPE AQUEUX COMESTIBLE PRESENTANT UNE QUANTITE REDUITE D'HUILE

(30) Priority: 03.05.2001 EP 01201609
(43) Date of publication of application: 18.02.2004
(73) Proprietor: UNILEVER N.V., 3013 AL Rotterdam (NL)
(72) Inventor: KUYPERS, Karel Abraham, NL-3133 AT Vlaardingen (NL); MEL'NIKOV, Sergey Michailovich, NL-3133 AT Vlaardingen (NL); SEIN, Arjen, NL-3133 AT Vlaardingen (NL)
(74) Representative: Rosen Jacobson, Frans Lucas M.
(86) International application number: PCT/EP2002/004084
(87) International publication number: WO 2002/089602

(56) References cited:
- EP-A- 0 386 336
- EP-A- 0 603 981
- EP-A- 0 788 747
- WO-A-00/78162
- GB-A- 1 527 526
- DATABASE WPI Section Ch, Derwent Publications Ltd., London, GB; Class D13, AN 1972-30871T XP002210604 -& JP 47 015735 B (BAN T), 10 May 1972 (1972-05-10) cited in the application
- PATENT ABSTRACTS OF JAPAN vol. 1997, no. 10, 31 October 1997 (1997-10-31) -& JP 09 149772 A (Q P CORP), 10 June 1997 (1997-06-10)
- DATABASE FSTA [Online] INTERNATIONAL FOOD INFORMATION SERVICE (IFIS), FRANFURT/MAIN, DE; SWIDERSKI F ET AL: "Study of storage stability of low-fat mayonnaise." Database accession no. 80-4-02-t0122 XP002210603 & ZESZYTY NAUKOWE SZKOLY GLOWNEJ GOSPODARSTWA WIEJSKIEGO AKADEMII ROLNICZEJ W WARSZAWIE, TECHNOLOGIA ROLNO-SPOZYWCZA 1978 INST. ZYWIENIA CZLOWIEKA, SGGW-AR, WARSAW, POLAND,
- DATABASE WPI Section Ch, Week 199324 Derwent Publications Ltd., London, GB; Class D13, AN 1993-194888 XP002210605 & SU 1 741 740 A (KHARK SECT FATS RES INST), 23 June 1992 (1992-06-23)
- ZALEWSKA S ET AL: "Influence of physico-chemical properties of milk protein concentrates on the stability of low-fat mayonnaise emulsions." ACTA ALIMENTARIA POLONICA 1984 INST. ZYWIENIA CZLOWIEKA, SGGW-AR, WARSAW, POLAND, vol. 10, no. 3/4, pages 255-263, XP001096348 ISSN: 0137-1495

## Description

### Field of the invention

The present invention relates to an edible, reduced fat oil-in-water type emulsion (o/w emulsion) having rheological and sensorial properties resembling those of mayonnaise or spreads.

### Background of the invention

Traditional mayonnaise is an o/w emulsion comprising vegetable oil (75-80%), egg yolk (5-8%), salt, vinegar, and optionally sugar, mustard, pepper and herbs. Traditional mayonnaise usually has a pH about 3.7-4.2. The oil is generally present as droplets dispersed in a water phase. Following the droplet size and the high amount of dispersed phase, the close packing of oil droplets gives the typical rheological behaviour of mayonnaise, which is perceived by consumers as thickness.

There is an increasing demand for mayonnaise-type products and spreads having a low content of oil without compromising the sensorial properties associated with full fat mayonnaise and spreads such as thickness and mouthfeel.

Lowering the amount of oil in an otherwise standard mayonnaise or spread formulation leads to a less dense packing of the oil droplets in the water phase resulting in reduced viscosity and/or thickness. Such a product will be pourable rather than spoonable or spreadable. To overcome this problem thickeners such as starch or gums may be used to increase thickness and/or viscosity of the formulation. The use of thickeners however can affect flavour and mouthfeel of the formulation. The use of starch for example can lead to sticky and/or chewy products.

Proteins such as whey proteins have been used as emulsifiers and/or means to structure oil in water emulsions.

EP 603981 (Verenigde Cooperatieve Melkindustrie Coberco) discloses the preparation of a heat-stable oil-in-water emulsion of adjustable viscosity. This emulsion is disclosed to contain 10 to 25 wt % oil and 3 to 7 wt % whey protein.

EP 788747 (Nestle) relates to a mayonnaise-like product containing 55-85% oil using milk proteins or vegetable proteins as emulsifiers rather than egg yolk. Said proteins are heat-denatured to a degree of 70-80%. The denaturation is reported to be necessary to obtain a mayonnaise-like product and to avoid gel formation.

JP015735/72 (Takeshi Ban) discloses a method for a mayonnaise-like o/w emulsion containing 65% fat/oil, egg yolk lecithin as emulsifier and about 2% casein. 30-40% of the total amount of edible oil, emulsifier and water are homogenised, 2% casein is added and the mixture is homogenised again after which vinegar and the remaining 30-50% of oil are added. The resulting mixture is then emulsified. The use of less than 1% casein is reported to lead to unstable emulsions.

It has now been found that it is possible to obtain a reduced fat mayonnaise and/or a spread-like product having similar thickness (as expressed in Stevens values) to a high fat mayonnaise and/or spread by preparing a mixture comprising oil, water, egg-yolk derived emulsifier and a casein salt that is soluble at a pH above 5.5, homogenising that emulsion and acidifying the homogenised mixture.

### Summary of the invention

According to a first aspect the present invention provides an homogenised and acidified, edible oil in water emulsion comprising:
30-60% (wt) edible oil, .
0.5-10% (wt) egg yolk derived emulsifier,
0.01-0,3% (wt) casein salt, that is water-soluble at a pH above 5.5,
70-25% (wt) water, and
0.1- 20% (wt) edible acid,
said emulsion having a final pH of 3.0-5.0 and wherein homogenisation has been carried out before the emulsion is acidified.

According to a second aspect the present invention provides a process comprising the steps of:
a) preparing a mixture comprising edible oil, water phase, egg-yolk derived emulsifier, casein salt which is soluble above pH 5.5,
b) homogenisation of the mixture,
c) acidification of the mixture of step b).

All percentages given herein are to be understood as being weight percentages unless explicitly stated otherwise.

Except in the operating and comparative examples, or where otherwise explicitly indicated, all numbers in this description indicating amounts of material or conditions of reaction, physical properties of materials and/or use are to be understood as modified by the word "about." All amounts are by weight, unless otherwise specified.

### Detailed description of the invention

Without wishing to be bound by theory it is believed that the the pH of the emulsion has an influence on both the solubility of the casein salt and the thickness of the final product. When an emulsion of a composition as above is prepared but without using the acid(s), the emulsion will typically have a pH value of around 6. The casein salt is water-soluble under these conditions and is upon homogenisation incorporated in the microstructure of the emulsion. The rheological properties of the emulsion at this stage are typically those of a pourable product. When the emulsion is acidified the solubility of the casein decreases. This seems to have an impact on the microstructure of the emulsion leading to a change in its rheological properties. It is thus possible to thicken such a homogenised emulsion by acidifying the emulsion to the pH of the final product (e.g. pH 3.0-5.0). Depending on the amounts of casein salt and the homogenisation pressure spoonable and/or spreadable products having the desired Steven values can be obtained in this way.

Products according to the invention comprise 0.01-0,3% (wt) of a casein salt (caseinate), that is water-soluble at a pH of 5.5 or above. Preferably, products according to the invention comprise between 0.02 - 0.3% (wt), and most preferably between 0.05 - 0.3% (wt) of the casein salt. Although the composition according to the invention may be achieved with a variety of casein salts, or a combination thereof, sodium caseinate is a preferred salt. Other suitable casein salts are, for example, potassium caseinate, ammonium caseinate or mixtures thereof. Suitable according to the invention are also caseinate containing preparations that have a similar water solubility to sodium caseinate at a pH af 5.5 at a temperature of 20 degree C.

For the avoidance of doubt it is stated here that the casein salt according to the invention is soluble at the conditions used for preparing the emulsion. In the final product, the acidified emulsion, the casein salt may or may not be in a water soluble state. Water-soluble is herein to be understood as being water soluble at a pH greater than 5.5, preferably in the range of from pH 5.5 to pH 7.

The composition according to the invention comprises about 30-60% (wt) of oil, or even more preferred about 40-60% (wt) of oil. Preferred oils are triglyceride oils of vegetable origin, such as sunflower, corn, olive, soy bean, palm, sesame, safflower or linseed oil or mixtures thereof.

In the products according to the invention preferred egg yolk derived emulsifiers are (fresh) egg yolk, stabilised egg yolk (SEY), enzymatically treated egg yolk, fortified stabilised egg mix (FSEM), dried egg yolk, salted egg yolk, or egg yolk treated in any other way as known in the art of egg yolk emulsifiers to yield egg-yolk derived emulsifiers, e.g. lecithin. When egg yolk is used in the compositions according to the invention, a suitable amount is 0.5-10% (wt), preferably 1-8% (wt), more preferably 3-7% (wt) when egg yolk-derived products are chosen (e.g. dried egg yolk) then the amount should be calculated on the basis of raw egg yolk. The presence of egg yolk may be beneficial for taste, emulsification and/or stability of the oil droplets.

Emulsions which according to the invention are intended as a reduced fat, mayonnaise-like product, may further comprise ingredients which are commonly used in mayonnaise, such as acetic acid, citric acid, lactic acid, phosphoric acid, hydrochloric acid, mustard (e.g. 0.1-15%), salt (e.g. 0.5-2%), pepper and sugar. The pH of the water phase of the final emulsion will usually be 3.0-5.0, preferably 3.5-4.5.

Emulsions, which are according to the invention intended as a reduced fat, spread-like product, may further comprise ingredients typically found in spreads.

The compositions according to the invention may further comprise of natural gums, and/or oligo- and polysaccharides and/or starch or modified starch in order to prevent syneresis or to improve long-term stability of the emulsion.

The preparation of emulsions according to the invention may suitably be carried out by a process involving the following steps:
a) preparation of a mixture of oil, water phase, water-soluble casein salt, egg-yolk derived emulsifier,
b) homogenisation of the mixture,
c) acidification of the mixture of step b).
   Optionally pasteurisations steps may be carried out.

Products obtained by the process above were found to have rheological and sensorial properties resembling those of mayonnaise or spread.

When step b) and c) are carried out in reversed order a pourable rather than a spoonable or spreadable product can be obtained.

The mixture is preferably prepared by:
- mixing all the ingredients except for the oil, the egg yolk derived emulsifier, and edible acid(s),
- optionally pasteurising,
- adding the egg yolk-derived emulsifier,
- optionally pasteurising,
- adding the oil,
- optionally pasteurising
- homogenising, e.g. in a high-pressure homogeniser,
- adding acid(s) to adjust to desired pH.

While the preparation of the mixture can be achieved by using ordinary emulsifying devices such as mixers or blenders, the homogenisation is preferably achieved by using a homogeniser, most preferably a high-pressure homogeniser. The thickness of the product can be adjusted for example by varying homogenisation pressure and the amount of the water-soluble casein salt used. The more protein is used the less pressure needs to be applied to get a desired product thickness. Both spoonable and spreadable oil in water emulsions may thus be obtained. Suitable pressure ranges are between 1 and 500 bar, preferred range being 20-400 bar.

Acidification may be achieved by the addition of one or more edible acids. Acidification may also be achieved through microbiological processes, such as for example microbiological formation of lactic acid. If the composition contains mustard or acidic mustard paste, it may be preferred to add it after the homogenisation step as the considerable amount of acid contained in mustard or a mustard paste can lower the pH of the emulsion and reduce the solubility of the casein salt. As a consequence, a different microstructure may be formed and a pourable product may be obtained.

The invention is further illustrated by the following examples, which are to be understood as non-limiting.

### EXAMPLES

Formulations, including a comparative formulation containing no water-soluble form of casein, have been prepared according to the compositions as set out in table 1. Of the resulting products, Stevens values have been measured. Stevens values give an indication about the firmness (spoonability,spreadability) of a product. The firmness of all products at 20°C (after storage at 20°C for 24 hours) was measured using a Stevens Texture Analyser (1 mm/sec, 25 mm depth, mayonnaise grid (mesh 7, thread thickness 0.8 mm, mesh width 2.8 mm) and is quoted herein as the Stevens value (in g). The accuracy of this measurement in all cases is ± 10 g. Stevens values of above 120 and well below 300 are typical for a spoonable product. Example 1 was a pourable product, examples 2, 3 and 4 were spoonable products and example 5 was a spreadable product.

### Processing example:

The o/w emulsions were prepared in three steps: preparation of the preemulsion (including the preparation of the aqueous phase), homogenisation in a high pressure homogeniser (HPH) and acidification. The preemulsion was prepared as follows: saccharose, sodium chloride and potassium sorbate were weighed separately and dissolved in water at room temperature. Then fortified stabilized egg mix (FSEM) was added to the aqueous phase. FSEM was prepared as follows: whole eggs (89-11, ex van Erven) were mixed with egg yolk (EY 92-8, ex van Erven), so that the final ratio [whole eggs] : [egg yolk] : [NaCl] was 65.9:25.0:9.1. The mixture was then treated with Lecitase L10 (ex Novo Nordisk) at 55°C for 180 min. After cooling to ambient temperature the fortified stabilised egg mix was stored at 4 °C .

Sunflower oil was added to the resulting solution under the continuous agitation with a high shear blender (Ultra-Turrax, T45 600W, JNKE & KUNKEL kg, Breisgau) for 5 minutes. The preemulsion was then processed with a Gaulin high-pressure homogeniser (HPH) for 5 minutes. After the homogenisation spirit vinegar and lactic acid were added under low shear stirring.

Table 1 shows embodiments of o/w emulsions according to the invention as well as a comparative example.

**Table 1: Embodiments of the invention and a comparative example.**

| Ingredients | Comparative % | Example 1 % | Example 2 % | Example 3 % | Example 4 % | Example 5 % |
|---|---|---|---|---|---|---|
| Oil Sunflower Oil) | 50 | 50 | 50 | 50 | 50 | 50 |
| Fortified stabilized egg mix | 5 | 5 | 7 | 5 | 5 | 6 |
| Sodium Caseinate | 0 | 0.15 | 0.15 | 0.15 | 0.3 | 0.3 |
| Alcohol vinegar (9.7% acetic acid) | 2.5 | 2.5 | 2.5 | 2.5 | 2.5 | 2.5 |
| Sucrose | 2.5 | 2.5 | 2.5 | 2.5 | 2.5 | 2.5 |
| Potassium sorbate | 0.1 | 0.1 | 0.1 | 0.1 | 0.1 | 0.1 |
| Salt | 1.5 | 1.5 | 1.5 | 1.5 | 1.5 | 1.5 |
| Lactic acid (85%) | 0.1 | 0.1 | 0.1 | 0.1 | 0.1 | 0.1 |
| Water | Balance | Balance | Balance | Balance | Balance | Balance |
| Total | 100 | 100 | 100 | 100 | 100 | 100 |
| | | | | | | |
| Homogenisation Details: | HPH 100 bar | HPH 100 bar | HPH 100 bar | HPH 200 bar | HPH 50 bar | HPH 200 bar |
| Stevens value (after 24 hours storage at 20°C) | 43 | 189 | 223 | 206 | 231 | 333 |

## Claims

1. A homogenised and acidified edible oil-in water emulsion comprising:
30-60% (wt) edible oil,
0.5-10% (wt) egg yolk derived emulsifier,
0.01-0.3% (wt) casein salt that is water soluble above pH 5.5,
70-25% (wt) water,
0.1-20% (wt) edible acid,
said emulsion having a final pH of 3.0-5.0 wherein
homogenisation has been carried out before the emulsion is acidified.

2. An emulsion according to claim 1 comprising 0.02 - 0.3 % (wt) of the water-soluble casein salt.

3. An emulsion according to either claim 1 or 2 comprising 0.05 - 0.3% (we) of the casein salt.

4. An emulsion according to any one of claims 1 to 3 wherein the casein, salt is sodium caseinate.

5. An emulsion according to any one of claims 1 to 4 wherein the edible acid comprises vinegar, lactic acid, hydrochloric acid, phosphoric acid, citric acid or mixtures thereof.

6. An emulsion according to any one of claims 1 to 5 wherein the egg yolk derived emulsifier comprises at least one of the following: egg yolk, stabilised egg yolk, fortified stabilised egg mix, dried egg yolk, salted egg yolk, enzymatically treated egg yolk, whole eggs.

7. An emulsion according to any one of claims 1 to 6 wherein the egg yolk derived emulsifier is present in an amount from 1-8% (wt).

8. An emulsion according to any one of claims 1 to 7 wherein the amount of oil is from 40 to 60% (wt).

9. An emulsion according to any one of claims 1 to 8 which also comprises one or more of the following; sugar, pepper, salt, herbs, colourants, mustard, starch, gums.

10. A process for preparing an emulsion according to any one of claim 1 to 9, the process comprising the steps of:
a)preparing a mixture comprising edible oil, water phase, egg-yolk derived emulsifier, casein salt which is soluble above pH 5.5,
b)homogenisation of the mixture,
c)acidification of the mixture of step b).

11. A process according to claim 10 wherein the homogenisation is achieved by using a high-pressure homogeniser.

12. A process according to claim 11 using a high-pressure homogeniser operating at a pressure of 1 to 500 bar, preferably 20-400 bar.

13. A process according to any one of claims 10 to 12 wherein acidification is carried out with at least one edible acid.

14. A process according to any one of claims 10 to 13 wherein acidification produces an emulsion having a pH in the range of from 3 to 5.

## Patentansprüche

1. Homogenisierte und angesäuerte eßbare Öl-in-Wasser-Emulsion, umfassend:
Speiseöl,
0,5 - 10 Gew.% aus Eigelb stammender Emulgator,
0,01 - 0,3 Gew.-% Caseinsalz, das bei einem pH über 5,5 wasserlöslich ist,
70 - 25 Gew.% Wasser,
0,1 - 20 Gew.% Genußsäure,
wobei die Emulsion einen End-pH von 3,0 - 5,0 aufweist und wobei die Homogenisierung durchgeführt wurde, bevor die Emulsion angesäuert wurde.

2. Emulsion nach Anspruch 1, umfassend 0,02 - 0,3 Gew.% des wasserlöslichen Caseinsalzes.

3. Emulsion nach Anspruch 1 oder 2, umfassend 0,05 - 0,3 Gew.-% des Caseinsalzes.

4. Emulsion nach einem der Ansprüche 1 bis 3, wobei das Caseinsalz Natriumcaseinat ist.

5. Emulsion nach einem der Ansprüche 1 bis 4, wobei die Genußsäure Essig, Milchsäure, Salzsäure, Phosphorsäure, Zitronensäure oder Gemische davon umfaßt.

6. Emulsion nach einem der Ansprüche 1 bis 5, wobei der aus Eigelb stammende Emulgator mindestens eines der folgenden umfaßt: Eigelb, stabilisiertes Eigelb, angereichertes stabilisiertes Eigemisch, getrocknetes Eigelb, gesalzenes Eigelb, enzymatisch behandeltes Eigelb, Vollei.

7. Emulsion nach einem der Ansprüche 1 bis 6, wobei der aus Eigelb stammende Emulgator in einer Menge von 1 - 8 Gew.-% vorliegt.

8. Emulsion nach einem der Ansprüche 1 bis 7, wobei die Menge an Öl 40 bis 60 Gew.-% beträgt.

9. Emulsion nach einem der Ansprüche 1 bis 8, die ferner eines oder mehrere der folgenden umfaßt: Zucker, Pfeffer, Salz, Kräuter, Farbstoffe, Senf, Stärke, Gummis.

10. Verfahren zur Herstellung einer Emulsion nach einem der Ansprüche 1 bis 9, umfassend die Schritte:
a) des Herstellens eines Gemisches, umfassend Speiseöl, Wasserphase, aus Eigelb stammender Emulgator, Caseinsalz, das bei einem pH über 5,5 löslich ist,
b) des Homogenisierens des Gemisches,
c) des Ansäuerns des Gemisches aus Schritt b).

11. Verfahren nach Anspruch 10, wobei die Homogenisierung durch Verwenden eines Hochdruckhomogenisators erreicht wird.

12. Verfahren nach Anspruch 11 unter Verwendung eines Hochdruckhomogenisators, der bei einem Druck von 1 bis 500 bar, vorzugsweise 20 bis 400 bar, arbeitet.

13. Verfahren nach einem der Ansprüche 10 bis 12, wobei die Ansäuerung mit mindestens einer Genußsäure durchgeführt wird.

14. Verfahren nach einem der Ansprüche 10 bis 13, wobei die Ansäuerung eine Emulsion mit einem pH in dem Bereich von 3 bis 5 erzeugt.

## Revendications

1. Émulsion d'huile comestible dans l'eau homogénéisée et acidifiée comprenant :
de l'huile comestible,
0,5 à 10 % (en poids) d'émulsifiant dérivé de jaune d'oeuf,
0,01 à 0,3 % (en poids) de sel de caséine qui est hydrosoluble au-delà d'un pH de 5,5,
70 à 25 % (en poids) d'eau,
0,1 à 20 % (en poids) d'acide comestible,
ladite émulsion ayant un pH final de 3,0 à 5,0,
dans laquelle l'homogénéisation a été effectuée avant que l'émulsion ne soit acidifiée.

2. Émulsion selon la revendication 1 comprenant 0, 02 à 0, 3 % (en poids) du sel de caséine hydrosoluble.

3. Émulsion selon l'une quelconque des revendications 1 et 2 comprenant 0,05 à 0,3 % (en poids) du sel de caséine.

4. Émulsion selon l'une quelconque des revendications 1 à 3 dans laquelle le sel de caséine est du caséinate de sodium.

5. Émulsion selon l'une quelconque des revendications 1 à 4 dans laquelle l'acide comestible comprend le vinaigre, l'acide lactique, l'acide chlorhydrique, l'acide phosphorique, l'acide citrique ou des mélanges de ceux-ci.

6. Émulsion selon l'une quelconque des revendications 1 à 5 dans laquelle l'émulsifiant dérivé de jaune d'oeuf comprend au moins l'un des constituants suivants : jaune d'oeuf, jaune d'oeuf stabilisé, mélange d'oeuf stabilisé et fortifié, jaune d'oeuf séché, jaune d'oeuf salé, jaune d'oeuf traité par procédé enzymatique, oeufs entiers.

7. Émulsion selon l'une quelconque des revendications 1 à 6 dans laquelle l'émulsifiant dérivé de jaune d'oeuf est présent en une quantité allant de 1 à 8 % (en poids).

8. Émulsion selon l'une quelconque des revendications 1 à 7 dans laquelle la quantité d'huile se situe de 40 à 60 % (en poids).

9. Émulsion selon l'une quelconque des revendications 1 à 8 qui comprend également un ou plusieurs des constituants suivants : sucre, poivre, sel, fines herbes, colorants, moutarde, amidon, gommes.

10. Procédé de préparation d'une émulsion selon l'une quelconque des revendications 1 à 9, le procédé comprenant les étapes consistant à :
a) préparer un mélange comprenant de l' huile comestible, une phase aqueuse, un émulsifiant dérivé de jaune d'oeuf, un sel de caséine qui est soluble au-delà d'un pH de 5,5,
b) homogénéiser le mélange,
c) acidifier le mélange de l'étape b).

11. Procédé selon la revendication 10 dans lequel l'homogénéisation est réalisée en utilisant un homogénéisateur haute-pression.

12. Procédé selon la revendication 11 utilisant un homogénéisateur haute-pression fonctionnant à une pression de 1 à 500 bar, de préférence de 20 à 400 bar.

13. Procédé selon l'une quelconque des revendications 10 à 12 dans lequel l'acidification est effectuée avec au moins un acide comestible.

14. Procédé selon l'une quelconque des revendications 10 à 13 dans lequel l'acidification produit une émulsion ayant un pH situé dans la plage allant de 3 à 5.
